# EUROPÄISCHE PATENTANMELDUNG

(11) **EP 4 287 601 A1**
(43) Veröffentlichungstag der Anmeldung: **06.12.2023**
(21) Anmeldenummer: 22177324.5
(22) Anmeldetag: 03.06.2022
(51) Int. Cl.: H04M 3/56

(54) **AUDIOOPTIMIERTES BETRIEBSVERFAHREN FÜR EIN KONFERENZSYSTEM**

(71) Anmelder: Deutsche Telekom AG, 53113 Bonn (DE)
(72) Erfinder: MINOW, Jascha, 64625 Bensheim (DE); EL MALLOUKI, Said, 56329 St.Goar (DE); JAHN, Carl, 65191 Wiesbaden (DE)
(74) Vertreter: RDL Patentanwälte PartG mbB

(57) **Zusammenfassung**

Verfahren zum Betreiben eines Konferenzsystems, bei dem jedes Mikrofon aus einer Mehrzahl von Mikrofonen eines Konferenzsystems während einer virtuellen Konferenz einen Audiostrom für einen Prozessor des Konferenzsystems bereitstellt und jeder Lautsprecher aus einer Mehrzahl von Lautsprechern des Konferenzsystems einen von dem Prozessor aus bereitgestellten Audioströmen erzeugten resultierenden Audiostrom ausgibt, sowie Konferenzsystem.

## Beschreibung

Die Erfindung betrifft ein Verfahren zum Betreiben eines Konferenzsystems, bei dem jedes Mikrofon aus einer Mehrzahl von Mikrofonen eines Konferenzsystems während einer virtuellen Konferenz einen Audiostrom für einen Prozessor des Konferenzsystems bereitstellt und jeder Lautsprecher aus einer Mehrzahl von Lautsprechern des Konferenzsystems einen von dem Prozessor aus bereitgestellten Audioströmen erzeugten resultierenden Audiostrom ausgibt. Ferner betrifft die Erfindung ein Konferenzsystem.

Verfahren der eingangs genannten Art gehören in unterschiedlichen Ausgestaltungen zum Stand der Technik und dienen dazu, Teilnehmern ein unmittelbares sprachliches Konferieren zu ermöglichen, welche zumindest teilweise an einer unmittelbaren wechselweitigen auditiven Wahrnehmung gehindert sind, beispielsweise infolge einer relativen Anordnung außerhalb einer jeweiligen akustischen Hörweite.

Das sprachliche Konferieren umfasst gewöhnlich sprachliche Äußerungen eines Teilnehmers, mehrerer Teilnehmer und insbesondere jedes Teilnehmers, welche von den jeweils übrigen Teilnehmern auditiv wahrgenommen werden müssen.

Aufgrund der zumindest teilweise fehlenden auditiven Wahrnehmbarkeit konferieren die Teilnehmer mittels eines Konferenzsystems, welches einen Prozessor, eine Mehrzahl von Mikrofonen und eine Mehrzahl von Lautsprechern umfasst, welche jeweils mit dem Prozessor funktional verbunden sind. Ein von dem Konferenzsystem vermitteltes Konferieren der Teilnehmer wird hier als virtuelle Konferenz bezeichnet.

Für ein Konferenzsystem, welches darüber hinaus eine Mehrzahl von jeweils mit dem Prozessor funktional verbundenen Kameras und Anzeigeschirmen umfasst und einem Teilnehmer während der virtuellen Konferenz ein visuelles Wahrnehmen eines weiteren Teilnehmers ermöglicht, ist die Bezeichnung Videokonferenzsystem gebräuchlich. Das erfindungsgemäße Betriebsverfahren ist insofern nicht nur für ein reines Audiokonferenzsystem, sondern auch für ein Videokonferenzsystem geeignet.

Bei einer virtuellen Konferenz kann eine auditive Qualität der ausgegebenen resultierenden Audioströme unzureichend sein. Beispielsweise werden Mikrofone mit unterschiedlichen Charakteristiken verwendet, erfasst ein Mikrofon beabsichtigt oder unbeabsichtigt sprachliche Äußerungen mehrerer Teilnehmer, erfassen mehrere Mikrofone unvermeidbar gleichzeitig sprachliche Äußerungen eines Teilnehmers, erfasst ein Mikrofon störende Hintergrundgeräusche oder weist der resultierende Audiostrom stark variierende Lautstärkepegel oder nicht benötigte bzw. störende sprachliche Äußerungen von Teilnehmern auf. Die häufig unzureichende auditive Qualität der virtuellen Konferenz kann mit einer geringen Effektivität der virtuellen Konferenz einhergehen.

Es ist daher eine Aufgabe der Erfindung, ein Verfahren zum Betreiben eines Konferenzsystems vorzuschlagen, welches ein Übertragen von Äußerungen von Teilnehmern einer virtuellen Konferenz mit einer hohen auditiven Qualität ermöglicht. Eine weitere Aufgabe der Erfindung ist, ein Konferenzsystem bereitzustellen.

Ein Gegenstand der Erfindung ist ein Verfahren zum Betreiben eines Konferenzsystems, bei dem jedes Mikrofon aus einer Mehrzahl von Mikrofonen eines Konferenzsystems während einer virtuellen Konferenz einen Audiostrom für einen Prozessor des Konferenzsystems bereitstellt und jeder Lautsprecher aus einer Mehrzahl von Lautsprechern des Konferenzsystems einen von dem Prozessor aus bereitgestellten Audioströmen erzeugten resultierenden Audiostrom ausgibt. Die Mikrofone und die Lautsprecher können unmittelbar mit einem, insbesondere mobilen oder stationären, Endgerät verbunden sein, welches über ein Netzwerk mit dem Prozessor funktional verbunden ist. Der Prozessor kann beispielsweise zu einer Internet-Cloud gehören. Das Konferenzsystem kann ferner eine verteilte Softwareanwendung mit einem Frontend und einem Backend umfassen. Das Frontend kann in dem Endgerät, das Backend in dem Prozessor implementiert sein.

Erfindungsgemäß umfasst das Erzeugen des resultierenden Audiostroms ein automatisches Auswählen von bereitgestellten Audioströmen abhängig von jeweiligen Signal-Rausch-Verhältnissen der bereitgestellten Audioströme und ein Mischen der ausgewählten Audioströme. Das Auswählen ist hier positiv oder negativ zu verstehen, d.h. jeder bereitgestellte Audiostrom kann ausgewählt oder nicht ausgewählt werden.

Von Mikrofonen bereitgestellte Audioströme mit einer geringen auditiven Qualtität, deren Signal-Rausch-Verhältnis einen vordefinierten Schwellwert unterschreitet und welche für die virtuelle Konferenz nicht erforderlich sind, werden von dem Prozessor nicht ausgewählt und gehören nicht zu dem resultierenden Audiostrom. Eine auditive Qualität des resultierenden Audiostroms wird infolgedessen nicht durch bereitgestellte Audioströme mit einer geringen auditiven Qualität beeinträchtigt.

Wenn beispielsweise zwei Mikrofone zwei Audioströme mit sprachlichen Äußerungen desselben Teilnehmers der virtuellen Konferenz bereitstellen, kann der Prozessor den bereitgestellten Audiostrom mit der geringeren auditiven Qualität beim Erzeugen des resultierenden Audiostroms weglassen.

Es wird angemerkt, dass der Prozessor keinen Audiostrom auszuwählen braucht und einen leeren resultierenden Audiostrom erzeugen kann, wenn die Teilnehmer der virtuellen Konferenz innerhalb einer Hörweite angeordnet sind und sich unmittelbar auditiv wahrnehmen können.

Bevorzugt umfasst das Erzeugen des resultierenden Audiostroms ein automatisches Auswählen von bereitgestellten Audioströmen abhängig von jeweiligen Lautstärkepegeln der bereitgestellten Audioströme. Von Mikrofonen bereitgestellte Audioströme mit einem Lautstärkepegel, welcher einen vordefinierten Schwellwert unterschreitet und welche für die virtuelle Konferenz nicht erforderlich sind, werden von dem Prozessor nicht ausgewählt und gehören nicht zu dem resultierenden Audiostrom. Eine auditive Qualität des resultierenden Audiostroms wird infolgedessen nicht durch bereitgestellte Audioströme mit unterschiedlichen Lautstärkepegeln beeinträchtigt. Unterschiedliche Lautstärkepegel bewirken, dass sprachliche Äußerungen von Teilnehmern der virtuellen Konferenz unterschiedlich gut auditiv wahrgenommen werden. Mit anderen Worten werden manche Teilnehmer gut verstanden, während andere Teilnehmer wegen geringer Lautstärke kaum oder nicht verstanden werden.

Weiterhin bevorzugt umfasst das Erzeugen des resultierenden Audiostroms ein automatisches Auswählen von bereitgestellten Audioströmen abhängig von einer Zuordnung von Mikrofonen zu Lautsprechern. Ein Mikrofon ist einem Lautsprecher zugeordnet, wenn das Mikrofon eine Ausgabe des Lautsprechers erfasst, d.h. wenn der Lautsprecher in einer Reichweite, d.h. Hörweite, des Mikrofons angeordnet ist. Wenn ein von einem Lautsprecher ausgegebener resultierender Audiostrom einen von dem zugeordneten Mikrofon bereitgestellten Audiostrom umfasst, wählt der Prozessor den bereitgestellten Audiostrom nicht aus. Auf diese Weise werden eine störende Rückkopplung bzw. ein störendes Echo zuverlässig vermieden.

Wenn einem Lautsprecher eine Mehrzahl von Mikrofonen zugeordnet ist, welche jeweils einen Audiostrom bereitstellen, wählt der Prozessor den bereitgestellten Audiostrom mit der höchsten auditiven Qualität aus und Audioströme mit einer geringeren auditiven Qualität nicht aus.

Vorteilhaft umfasst das Erzeugen des resultierenden Audiostroms ein manuelles Auswählen von bereitgestellten Audioströmen durch einen einem Lautsprecher zugeordneten Teilnehmer der virtuellen Konferenz. Jeder Teilnehmer kann die auditive Qualität des von ihm auditiv wahrgenommenen resultierenden Audiostroms durch Entfernen eines störenden und nicht erforderlichen bereitgestellten Audiostroms vergrößern.

Beispielsweise kann der Teilnehmer einen bereitgestellten Audiostrom abwählen, welcher unmittelbar auditiv wahrnehmbare sprachliche Äußerungen eines weiteren Teilnehmers der virtuellen Konferenz umfasst, etwa weil der weitere Teilnehmer in einer Hörweite des Teilnehmers angeordnet ist. Ebenso kann der Teilnehmer einen bereitgestellten Audiostrom abwählen, welcher sprachliche Äußerungen eines weiteren Teilnehmers der virtuellen Konferenz umfasst, welche auch zu einem weiteren bereitgestellten Audiostrom gehören. Auf diese Weise werden Dopplungen von sprachlichen Äußerungen in dem resultierenden Audiostrom vermieden.

Das Erzeugen des resultierenden Audiostroms kann ein Normalisieren eines Lautstärkepegels jedes ausgewählten Audiostroms und/oder ein Bearbeiten jedes ausgewählten Audiostroms mittels eines Hochpass-Filters, eines Rauschunterdrückers und/oder eines Equalizers umfassen. Das Normalisieren der ausgewählten Audioströme vereinheitlicht eine Lautstärke des resultierenden Audiostroms. Die ausgewählten Audioströme können mittels laufend zwischengespeicherter Zeitabschnitte der ausgewählten Audioströme normalisiert werden. Längen der Zeitabschnitte sind größer als Latenzen (s.u.) der die ausgewählten Audioströme bereitstellenden Mikrofone.

Der Hochpass-Filter kann Frequenzen außerhalb eines Frequenzbereichs von 2 kHz bis 5 kHz dämpfen. Auf diese Weise werden übliche Sprechfrequenzen in den ausgewählten Audioströmen bevorzugt.

Der Rauschunterdrücker kann Sprechpausen erkennen, von sprachlichen Äußerungen verschiedene Geräusche aus den ausgewählten Audioströmen in den erkannten Sprechpausen extrahieren und die extrahierten Geräusche als ein Rauschprofil auf den Audiostrom negativ interferierend anwenden. Auf diese Weise wird ein Signal-Rausch-Verhältnis der ausgewählten Audioströme verbessert.

Der Equalizer kann bestimmte Frequenzbereiche der ausgewählten Audioströme anheben oder absenken. Auf diese Weise wird eine Verständlichkeit von in den ausgewählten Audioströmen enthaltenen sprachlichen Äußerungen verbessert.

Insbesondere kann jedes Mikrofon sprachliche Äußerungen eines einzigen Teilnehmers der virtuellen Konferenz oder mehrerer Teilnehmer der virtuellen Konferenz als ein Signal und Hintergrundgeräusche als ein Rauschen erfassen und das Bereitstellen des Audiostroms ein Digitalisieren des erfassten Signals und Rauschens umfassen. Das Signal-Rausch-Verhältnis ist wie üblich als ein Verhältnis eines Signalpegels zu einem Rauschpegel definiert. Wenn das Mikrofon sprachliche Äußerungen mehrerer Teilnehmer der virtuellen Konferenz erfasst, können sprachliche Äußerungen mit einem geringeren Signalpegel wahlweise dem Signal oder dem Rauschen zugeordnet werden.

Ein mit dem Mikrofon integrierter A/D-Wandler oder ein A/D-Wandler eines mit dem Mikrofon funktional verbundenen Endgeräts kann das erfasste Signal und Rauschen digitalisieren.

In einer Ausführungsform stellt der Prozessor eine Eingangsempfindlichkeit jedes Mikrofons abhängig von einem Abstand eines dem Mikrofon zugeordneten Teilnehmers der virtuellen Konferenz von dem Mikrofon und/oder einer Winkelposition eines dem Mikrofon zugeordneten Teilnehmers der virtuellen Konferenz relativ zu dem Mikrofon ein. Das individuelle Einstellen der Eingangsempfindlichkeit bewirkt ein Erfassen von sprachlichen Äußerungen mit einer hohen auditiven Qualität und gleicht unterschiedliche Charakteristika der zu dem Konferenzsystem gehörigen Mikrofone aus. Das individuelle Einstellen der Eingangsempfindlichkeit geht mit einer höheren auditiven Qualtität des bereitgestellten Audiostroms einher als ein nachträgliches Normalisieren des bereitgestellten Audiostroms.

In einer weiteren Ausführungsform erzeugen zumindest zwei Mikrofone gemeinsam einen Surround-Audiostrom und stellen die zumindest zwei Mikrofone den erzeugten Surround-Audiostrom als den Audiostrom bereit und geben zumindest zwei Lautsprecher gemeinsam den erzeugten resultierenden Audiostrom aus. Die zumindest zwei Mikrofone können zu einem Mikrofonarry gehören, welches ein Einstellen einer gerichteten Eingangsempfindlichkeit in zwei oder drei Dimensionen ermöglicht. Die zumindest zwei Lautsprecher können zu einem Kopfhörer bzw. einem Headset oder zu einer Surround-Anlage gehören, welche ein gerichtetes Ausgeben des resultierenden Audiostroms in zwei oder drei Dimensionen ermöglicht. Auf diese Weise bleiben räumliche Beziehungen zwischen Teilnehmern der virtuellen Konferenz erhalten, wodurch die auditive Qualität, insbesondere eine Lebendigkeit und Realitätsnähe, des resultierenden Audiostroms erhöht ist. Wenn das Konferenzsystem als ein Videosystem ausgebildet ist, wird ein Zuordnen einer sprachlichen Äußerung zu einem Video eines Teilnehmers erleichtert.

Zum Initialisieren des Konferenzsystems erzeugt der Prozessor ein Initialsignal und stellt das erzeugte Initialsignal für die Lautsprecher bereit, gibt jeder Lautsprecher das bereitgestellte Initialsignal aus, erfasst jedes Mikrofon das ausgegebene Initialsignal und stellt jedes Mikrofon das erfasste Initialsignal als den Audiostrom bereit und ermittelt der Prozessor anhand der bereitgestellten Audioströme für jedes Mikrofon eine Latenz und/oder eine Zuordnung eines Mikrofons zu einem Lautsprecher. Die Latenz ist ein Zeitversatz zwischen einem von dem Mikrofon erfassten Schall und dem in dem von dem Mikrofon bereitgestellten Audiostrom enthaltenen Schall, welcher im Wesentlichen einer für das Digitalisieren aufzuwendenden Rechenzeit entspricht.

Die Zuordnung der Mikrofone zu den Lautsprechern erfolgt anhand des in den von den Mikrofonen bereitgestellten Audioströmen jeweils enthaltenen Initialsignals, d.h. ein Mikrofon ist einem Lautsprecher genau dann zugeordnet, wenn der von dem Mikrofon bereitgestellte Audiostrom das von dem Lautsprecher ausgegebene Initialsignal enthält.

Ein weiterer Gegenstand der Erfindung ist ein Konferenzsystem, welches einen Prozessor, eine Mehrzahl von mit dem Prozessor funktional verbundenen Mikrofonen und eine Mehrzahl von mit dem Prozessor funktional verbundenen Lautsprechern umfasst. Konferenzsysteme sind weit verbreitet. Entsprechend ergeben sich vielfältige Anwendungsmöglichkeiten für die Erfindung. Wenn der Prozessor als eine Software implementiert ist, kann das Konferenzsystem durch ein Aktualisieren der Software des Prozessors besonders einfach erfindungsgemäß ausgebildet werden.

Erfindungsgemäß ist das Konferenzsystem konfiguriert, ein Verfahren nach einer Ausführungsform der Erfindung auszuführen. Das Konferenzsystem ermöglicht virtuelle Konferenzen mehrerer Teilnehmer mit einer hohen auditiven Qualität.

Ein wesentlicher Vorteil des erfindungsgemäßen Verfahrens besteht darin, dass Äußerungen von Teilnehmern einer virtuellen Konferenz mit einer hohen auditiven Qualität übertragen werden können. Auf diese Weise wird eine höhere Effektivität der virtuellen Konferenz und bei den Teilnehmern eine größere Akzeptanz der virtuellen Konferenz erreicht.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

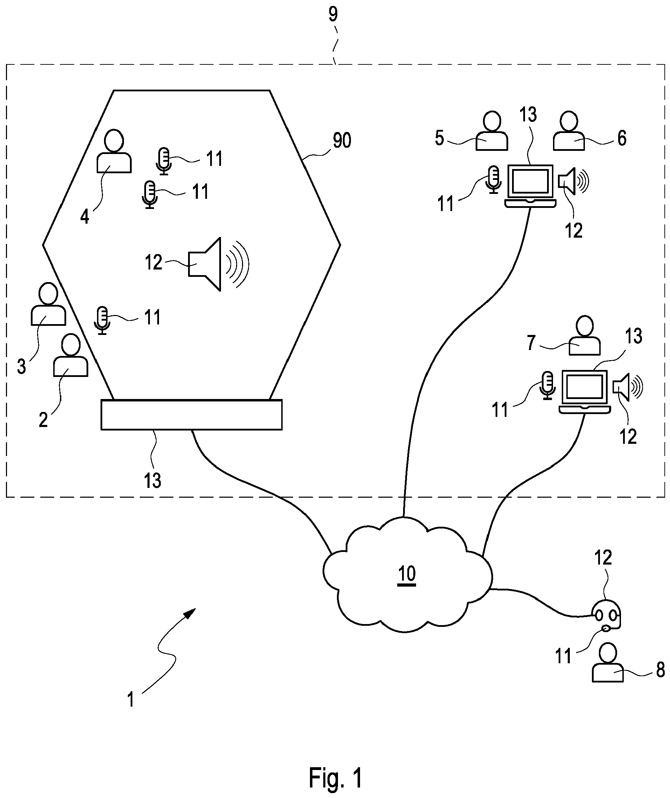

Die Erfindung ist anhand eines Ausführungsbeispiels in den Zeichnungen schematisch dargestellt und wird im Folgenden unter Bezugnahme auf die Zeichnungen ausführlich beschrieben. Es zeigt
- Fig. 1: in einem Blockdiagramm ein Konferenzsystem nach einer Ausführungsform der Erfindung.

Fig. 1 zeigt in einem Blockdiagramm ein Konferenzsystem 1 nach einer Ausführungsform der Erfindung. Das Konferenzsystem 1 umfasst einen Prozessor 10, eine Mehrzahl von mit dem Prozessor 10 funktional verbundenen Mikrofonen 11 und eine Mehrzahl von mit dem Prozessor 10 funktional verbundenen Lautsprechern 12. Das Konferenzsystem 1 kann ferner in bekannter Weise eine Mehrzahl von mit dem Prozessor 10 funktional verbundenen Anzeigeschirmen 13 und (nicht dargestellten) Kameras umfassen und als ein Videokonferenzsystem ausgebildet sein.

Lediglich beispielhaft und nicht einschränkend umfasst eine mittels des Konferenzsystems 1 durchgeführte virtuelle Konferenz eine Mehrzahl von Teilnehmern 2, 3, 4, 5, 6, 7 und 8, von denen die Teilnehmer 2, 3, 4, 5, 6 und 7 in einem Großraumbüro 9 und der Teilnehmer 8 außerhalb des Großraumbüros 9, beispielsweise in einem (nicht dargestellten) Fahrzeug, angeordnet sind. Die Teilnehmer 2, 3 und 4 sind an einem in dem Großraumbüro 9 angeordneten Konferenztisch 90 angeordnet. Die Teilnehmer 5, 6 und 7 sind beabstandet zu dem Konferenztisch 90 angeordnet, beispielsweise an jeweiligen Arbeitsplätzen in dem Großraumbüro 9.

Dem Konferenztisch 90 bzw. den Teilnehmern 2, 3 und 4 sind drei Mikrofone 11 und ein Lautsprecher 12 sowie ggf. ein Anzeigeschirm 13 zugeordnet. Ein Mikrofon 11 ist den Teilnehmern 2 und 3 zugeordnet, d.h. zum Erfassen von sprachlichen Äußerungen der Teilnehmer 2 und 3 vorgesehen, die beiden weiteren Mikrofone 11, welche als ein Mikrofon-Array ausgebildet sein können, sind dem Teilnehmer 4 zugeordnet, d.h. zum Erfassen von sprachlichen Äußerungen des Teilnehmers 4 vorgesehen. Der Lautsprecher 12 ist jedem der Teilnehmer 2, 3 und 4 zugeordnet, d.h. zum Ausgeben eines Audiostroms, welcher von jedem der Teilnehmer 2, 3, und 4 auditiv wahrnehmbar ist.

Den Teilnehmern 5 und 6 gemeinsam sind ein Mikrofon 11, ein Lautsprecher 12 uns ggf. ein Anzeigeschirm 13 zugeordnet. Dem Teilnehmer 7 allein sind ein Mikrofon 11, ein Lautsprecher und ggf. ein Anzeigeschirm 13 zugeordnet. Dem Teilnehmer 8 sind ein Mikrofon 11 und zwei Lautsprecher 12, welche als ein Headset ausgebildet sind, aber kein Anzeigeschirm zugeordnet.

Das Konferenzsystem 1 ist konfiguriert, zum Betreiben des Konferenzsystems 1 ein Verfahren nach einer Ausführungsform der Erfindung wie folgt auszuführen.

Bei einem Beginn der virtuellen Konferenz kann das Konferenzsystem 1 initialisiert werden. Zum Initialisieren des Konferenzsystems 1 erzeugt der Prozessor 10 ein Initialsignal und stellt das erzeugte Initialsignal für die Lautsprecher 12 bereit. Jeder Lautsprecher 12 gibt das bereitgestellte Initialsignal aus. Jedes Mikrofon 11 erfasst das ausgegebene Initialsignal und stellt das erfasste Initialsignal als den Audiostrom bereit. Der Prozessor 10 ermittelt anhand der bereitgestellten Audioströme für jedes Mikrofon 11 eine Latenz und/oder eine Zuordnung eines Mikrofons 11 zu einem Lautsprecher 12.

Jedes Mikrofon 11 aus der Mehrzahl von Mikrofonen 11 des Konferenzsystems 1 stellt während der virtuellen Konferenz einen Audiostrom für den Prozessor 10 des Konferenzsystems 1 bereit. Zumindest zwei Mikrofone 11, beispielsweise die beiden dem Teilnehmer 4 zugeordneten Mikrofone 11, können gemeinsam einen Surround-Audiostrom erzeugen und den erzeugten Surround-Audiostrom als den Audiostrom bereitstellen.

Jedes Mikrofon 11 kann sprachliche Äußerungen eines einzigen Teilnehmers 2, 3, 4, 5, 6, 7 und 8 der virtuellen Konferenz oder mehrerer Teilnehmer 2, 3, 4, 5, 6, 7 und 8 der virtuellen Konferenz als ein Signal und Hintergrundgeräusche als ein Rauschen erfassen. Das Bereitstellen des Audiostroms kann ein Digitalisieren des erfassten Signals und Rauschens umfassen.

Der Prozessor 10 kann eine Eingangsempfindlichkeit jedes Mikrofons 11 abhängig von einem Abstand eines dem Mikrofon 11 zugeordneten Teilnehmers 2, 3, 4, 5, 6, 7, 8 der virtuellen Konferenz von dem Mikrofon 11 und/oder einer Winkelposition eines dem Mikrofon 11 zugeordneten Teilnehmers 2, 3, 4, 5, 6, 7, 8 der virtuellen Konferenz relativ zu dem Mikrofon 11 einstellen.

Jeder Lautsprecher 12 aus der Mehrzahl von Lautsprechern 12 des Konferenzsystems 1 gibt einen von dem Prozessor 10 aus bereitgestellten Audioströmen erzeugten resultierenden Audiostrom aus. Zumindest zwei Lautsprecher 12, beispielsweise die beiden dem Teilnehmer 8 zugeordneten Lautsprecher 12, können gemeinsam den erzeugten resultierenden Audiostrom ausgeben, wenn zumindest zwei Mikrofone 11 gemeinsam einen Surround-Audiostrom erzeugen.

Das Erzeugen des resultierenden Audiostroms umfasst ein automatisches Auswählen von bereitgestellten Audioströmen abhängig von jeweiligen Signal-Rausch-Verhältnissen der bereitgestellten Audioströme und ein Mischen der ausgewählten Audioströme.

Das Erzeugen des resultierenden Audiostroms umfasst bevorzugt ein automatisches Auswählen von bereitgestellten Audioströmen abhängig von jeweiligen Lautstärkepegeln der bereitgestellten Audioströme.

Das Erzeugen des resultierenden Audiostroms kann ferner ein automatisches Auswählen von bereitgestellten Audioströmen abhängig von einer Zuordnung von Mikrofonen 11 zu Lautsprechern 12 umfassen.

Vorteilhaft umfasst das Erzeugen des resultierenden Audiostroms weiterhin ein manuelles Auswählen von bereitgestellten Audioströmen durch einen einem Lautsprecher 12 zugeordneten Teilnehmer 2, 3, 4, 5, 6, 7, 8 der virtuellen Konferenz.

Das Erzeugen des resultierenden Audiostroms umfasst idealerweise ein Normalisieren eines Lautstärkepegels jedes ausgewählten Audiostroms und/oder ein Bearbeiten jedes ausgewählten Audiostroms mittels eines Hochpass-Filters, eines Rauschunterdrückers und/oder eines Equalizers.

### Bezugszeichenliste

- 1: Konferenzsystem
- 10: Prozessor
- 11: Mikrofon
- 12: Lautsprecher
- 13: Anzeigeschirm
- 2: Teilnehmer
- 3: Teilnehmer
- 4: Teilnehmer
- 5: Teilnehmer
- 6: Teilnehmer
- 7: Teilnehmer
- 8: Teilnehmer
- 9: Großraumbüro
- 90: Konferenztisch

## Patentansprüche

1. Verfahren zum Betreiben eines Konferenzsystems (1), bei dem
- jedes Mikrofon (11) aus einer Mehrzahl von Mikrofonen (11) eines Konferenzsystems (1) während einer virtuellen Konferenz einen Audiostrom für einen Prozessor (10) des Konferenzsystems (1) bereitstellt und jeder Lautsprecher (12) aus einer Mehrzahl von Lautsprechern (12) des Konferenzsystems (1) einen von dem Prozessor (10) aus bereitgestellten Audioströmen erzeugten resultierenden Audiostrom ausgibt;
- das Erzeugen des resultierenden Audiostroms ein automatisches Auswählen von bereitgestellten Audioströmen abhängig von jeweiligen Signal-Rausch-Verhältnissen der bereitgestellten Audioströme und ein Mischen der ausgewählten Audioströme umfasst.

2. Verfahren nach Anspruch 1, bei dem das Erzeugen des resultierenden Audiostroms ein automatisches Auswählen von bereitgestellten Audioströmen abhängig von jeweiligen Lautstärkepegeln der bereitgestellten Audioströme umfasst.

3. Verfahren nach Anspruch 1 oder 2, bei dem das Erzeugen des resultierenden Audiostroms ein automatisches Auswählen von bereitgestellten Audioströmen abhängig von einer Zuordnung von Mikrofonen (11) zu Lautsprechern (12) umfasst.

4. Verfahren nach einem der Ansprüche 1 bis 3, bei dem das Erzeugen des resultierenden Audiostroms ein manuelles Auswählen von bereitgestellten Audioströmen durch einen einem Lautsprecher (12) zugeordneten Teilnehmer (2, 3, 4, 5, 6, 7, 8) der virtuellen Konferenz umfasst.

5. Verfahren nach einem der Ansprüche 1 bis 4, bei dem das Erzeugen des resultierenden Audiostroms ein Normalisieren eines Lautstärkepegels jedes ausgewählten Audiostroms und/oder ein Bearbeiten jedes ausgewählten Audiostroms mittels eines Hochpass-Filters, eines Rauschunterdrückers und/oder eines Equalizers umfasst.

6. Verfahren nach einem der Ansprüche 1 bis 5, bei dem jedes Mikrofon (11) sprachliche Äußerungen eines einzigen Teilnehmers (2, 3, 4, 5, 6, 7, 8) der virtuellen Konferenz oder mehrerer Teilnehmer (2, 3, 4, 5, 6, 7, 8) der virtuellen Konferenz als ein Signal und Hintergrundgeräusche als ein Rauschen erfasst und das Bereitstellen des Audiostroms ein Digitalisieren des erfassten Signals und Rauschens umfasst.

7. Verfahren nach einem der Ansprüche 1 bis 6, bei dem der Prozessor (10) eine Eingangsempfindlichkeit jedes Mikrofons (11) abhängig von einem Abstand eines dem Mikrofon (11) zugeordneten Teilnehmers (2, 3, 4, 5, 6, 7, 8) der virtuellen Konferenz von dem Mikrofon (11) und/oder einer Winkelposition eines dem Mikrofon (11) zugeordneten Teilnehmers (2, 3, 4, 5, 6, 7, 8) der virtuellen Konferenz relativ zu dem Mikrofon (11) einstellt.

8. Verfahren nach einem der Ansprüche 1 bis 7, bei dem zumindest zwei Mikrofone (11) gemeinsam einen Surround-Audiostrom erzeugen und den erzeugten Surround-Audiostrom als den Audiostrom bereitstellen und zumindest zwei Lautsprecher (12) gemeinsam den erzeugten resultierenden Audiostrom ausgeben.

9. Verfahren nach einem der Ansprüche 1 bis 8, bei dem zum Initialisieren des Konferenzsystems (1)
- der Prozessor (10) ein Initialsignal erzeugt und für die Lautsprecher (12) bereitstellt;
- jeder Lautsprecher (12) das bereitgestellte Initialsignal ausgibt;
- jedes Mikrofon (11) das ausgegebene Initialsignal erfasst und das erfasste Initialsignal als den Audiostrom bereitstellt;
- der Prozessor (10) anhand der bereitgestellten Audioströme für jedes Mikrofon (11) eine Latenz und/oder eine Zuordnung eines Mikrofons (11) zu einem Lautsprecher (12) ermittelt.

10. Konferenzsystem (1), welches einen Prozessor (10), eine Mehrzahl von mit dem Prozessor (10) funktional verbundenen Mikrofonen (11) und eine Mehrzahl von mit dem Prozessor (10) funktional verbundenen Lautsprechern (12) umfasst und konfiguriert ist, ein Verfahren nach einem der Ansprüche 1 bis 9 auszuführen.
